# EUROPEAN PATENT SPECIFICATION

(11) **EP 2 797 005 B1**
(45) Date of publication and mention of the grant of the patent: **16.08.2017**
(21) Application number: 11878253.1
(22) Date of filing: 19.12.2011
(51) Int. Cl.: H04L 29/08, G06F 3/06

(54) **LOAD DISTRIBUTION SYSTEM**
LASTVERTEILUNGSSYSTEM
SYSTÈME DE RÉPARTITION DE CHARGE

(43) Date of publication of application: 29.10.2014
(73) Proprietor: Fujitsu Limited, Kawasaki-shi, Kanagawa 211-8588 (JP)
(72) Inventor: YANAGAWA, Toshihide, Kawasaki-shi Kanagawa 211-8588 (JP)
(74) Representative: Hoffmann Eitle
(86) International application number: PCT/JP2011/079425
(87) International publication number: WO 2013/094007

(56) References cited:
- JP-A- 2010 218 235
- JP-A- 2010 218 344
- JP-A- 2011 215 677
- US-A1- 2004 133 707
- US-A1- 2006 190 603
- US-A1- 2010 094 955
- US-B2- 7 069 276

## Description

### Technical Field

The embodiment below relates to a load distribution system.

### Background Art

With the recent development of computers and networks, a service is being implemented in which data previously stored in, e.g., a local hard disk is stored in a memory device of a server system connected via a network. This service is called a cloud service. In such a cloud service, a large number of servers are provided, and processing requests from users are distributed to the servers. At this time, load distribution needs to be performed in order to prevent processes from being concentrated on one server. The load on a server depends largely on a time from when the server issues an I/O processing request to a memory device to when the I/O processing request is processed, i.e. , the processing speed of the memory device. If the memory device processes the I/O processing request quickly, the server having sent the I/O processing request finishes processing early, which reduces the load. Thus, the load on the server is determined by a response time of the memory device.

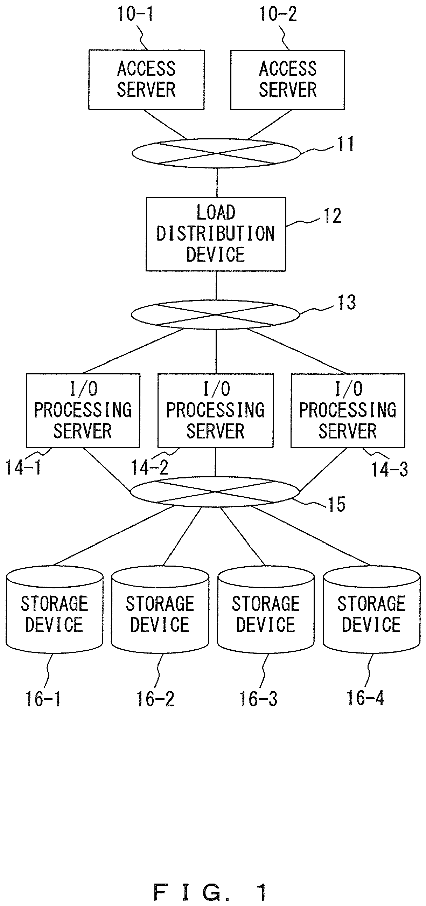

FIG. 1 is a diagram for explaining a conventional technique for load distribution.

A system in FIG. 1 includes access servers 10-1 and 10-2 which accept a processing request from a user and a load distribution device 12. The system also includes I/O processing servers 14-1 to 14-3 which process an access request from the access server 10-1 or 10-2 and storage devices 16-1 to 16-4 which perform data writing and reading. The components are connected by networks 11, 13, and 15. As for the connection between the I/O processing servers 14-1 to 14-3 and the storage devices 16-1 to 16-4 , apluralityof ones of the storage devices maybe connected to one of the I/O processing servers or a plurality of ones of the I/O processing servers may be connected to one of the storage devices, via the network 15. When each access server is to transfer an I/O processing request to a storage device, the access server determines whether to transfer the I/O processing request to the desired storage device via an I/O processing server. Every I/O processing server is set to be capable of transferring an I/O processing request to any storage device.

In a convention method for load leveling, the loads on the I/O processing servers 14-1 to 14-3 that perform actual processing are levelled using the load distribution device 12. FIG. 1 illustrates an example in which the plurality of access servers 10-1 and 10-2 that make an I/O processing request (a request for writing to or reading from the storage devices 16-1 to 16-4) are present, and the loads on the I/O processing servers 14-1 to 14-3 are distributed using the load distribution device 12.

Assume a case where a given I/O processing server performs writing to a given storage device. Even when an I/O processing request is issued from an access server, if the load on the storage device is high, and a response is slow, it takes a long time for the I/O processing server to perform processing. Thus, the load on the I/O processing server can be considered as high in this case. The load here refers to the overall load on the system side that includes the I/O processing server and the storage device, as viewed from the access server. If an access server desires to access given data, the access server never accesses the data without access to a storage device holding the data. If the traffic to a given storage device is heavy, a load cannot be distributed. However, in the sense of distribution of the load on a system including an I/O processing server and a storage device as viewed from an access server, the load on the I/O processing server may be distributed. A plurality of I/O processing servers and a plurality of storage devices are interconnected, and different I/O processing servers can gain access to a single storage device. The load on an I/O processing server can be considered to refer to a response time from when an I/O processing request is transmitted to a storage device to when processing of the I/O processing request is completed. Thus, if a response time of a given I/O processing server is long, an I/O processing request is sent to a different I/O processing server with a shorter response time. This allows distribution of the load on a system including an I/O processing server and a storage device even in a case where access servers try to gain access to the same storage device.

With the above-described configuration, if the load on any of the I/O processing servers 14-1 to 14-3 becomes high, the load distribution device 12 distributes shares of the load to the others of the I/O processing servers 14-1 to 14-3. This configuration suffers from the two problems below.

### - High Load on Load Distribution Device 12

If the number of access servers 10-1 and 10-2 increases, the load on the load distribution device 12 may become higher to cause a bottleneck in processing by the load distribution device 12.

### - Abnormality in Load Distribution Device 12

If an abnormality occurs in the load distribution device 12, and the load distribution device 12 goes down, processing of all I/O processing requests stops.

For transfer of processing of an I/O processing request in the event of an abnormality, a conventional method adopts a multipath method.

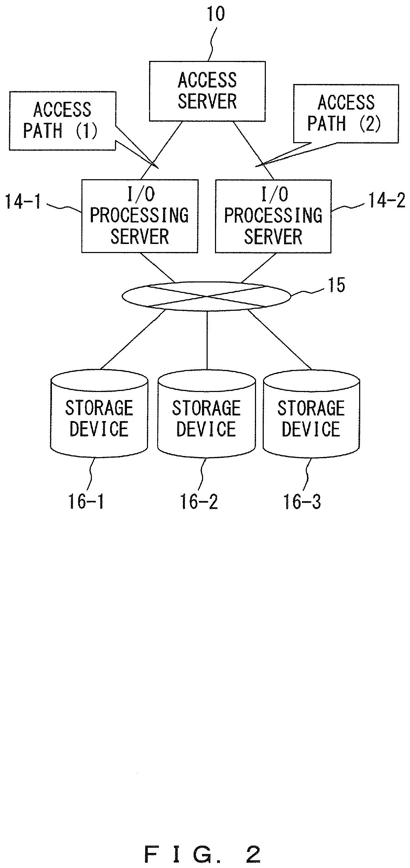

FIG. 2 is a configuration diagram of a case using a conventional multipath method.

In an access server 10, a plurality of paths (access paths (1) and (2)) to the I/O processing server 14-1 and the I/O processing server 14-2 are defined in advance. Assume that an abnormality has occurred in the I/O processing server 14-1 when the I/O processing servers 14-1 and 14-2 are performing processing of I/O processing requests. In this case, the access server 10 continues processing by switching an access path from access path (1) to access path (2).

The method suffers from the problem below.

Assume a situation where there are a plurality of access servers, and an abnormality occurs in any one of I/O processing servers when the access servers are using the same I/O processing servers. In this situation, since each access server performs path switching, the load on a specific I/O processing server may become high after the path switching.

Provision of a mechanism by which access servers adjust the loads on I/O processing servers can serve as measures against increase in the load on a specific I/O processing server. However, this case requires some communication means between access servers. In light of a cloud service and the like, individual access servers are likely to be managed by different companies. Communication between access servers may cause a leakage of secrets of a company to a different company. The method in FIG. 2 has the problems, that is, the security problem, increase in configuration complexity, and increase in system cost associated with the increase in configuration complexity.

In some conventional techniques, a storage management server which manages information on a server, an application running on the server, a storage device, an access path, and the like is provided to perform load distribution. In other conventional techniques, a controller in a storage subsystem monitors the load status of each connection port, and load distribution is performed on a result of the monitoring.

### Prior Art Document

### Patent Document

Patent Document 1: Japanese Patent Laid-Open No. 2007-233783
Patent Document 2: Japanese Patent Laid-Open No. 2008-9497

Document US 7069276 B2 relates to a method for automatically changing a server appliance for processing data in a distributed computer system. The computer system is composed of a plurality of client computers, a plurality of server appliances including front end servers (FES) and back end servers (BES), storage systems connected via a fiber switch to the server appliances and a network.

Document US 2006/190603 A1 relates to a congestion controller operating as a relay in communication between a client and a web server. The congestion controller operates as a relay in client access to a web server. At the same time, the congestion controller monitors, for example, the quantity of simultaneous access to each web server, a response time, and a time-out error count.

### SUMMARY OF THE INVENTION

### Problems to be Solved by the Invention

In an environment with a large number of access servers and a large number of I/O processing servers, when the configuration in FIG. 1 that can efficiently distribute the loads on I/O processing servers is adopted, a service may stop in the event of an abnormality in a load distribution device.

In the method (FIG. 2) that performs I/O processing server switching if an abnormality occurs in an I/O processing server, information for load adjustment needs to be exchanged between a large number of access servers in order to level the loads on a large number of I/O processing servers. This case suffers from the problems of increase in the complexity of system configuration, security vulnerability, and the like.

There is thus a need for different measures to prevent issued I/O processing requests from being concentrated on a specific I/O processing server.

In one aspect, it is an object of the present invention to achieve load distribution in a system having a plurality of access servers and a plurality of I/O processing servers. Means for Solving the Problems

The object of the invention is achieved by the subject-matter of the independent claims. Advantageous embodiments are defined in the dependent claims. Further examples are provided for facilitating the understanding of the invention.

### Effect of the Invention

According to one embodiment, load distribution in a system having a plurality of access servers and a plurality of I/O processing servers can be achieved.

### Brief Description of Drawings

FIG. 1 is a diagram for explaining a conventional technique for load distribution.
FIG. 2 is a configuration diagram of a case using a conventional multipath method.
FIG. 3 is a configuration diagram of an overall system including a load distribution system according to the present embodiment.
FIG. 4 is a block diagram of each of an access server and an I/O processing server.
FIG. 5 is a sequence chart illustrating a basic flow of communication between an access server and an I/O processing server.
FIG. 6 is a sequence chart illustrating an overall flow of a case where an abnormality occurs in an I/O processing server, and switching from the I/O processing server to a different I/O processing server is performed.
FIG. 7 is a flowchart of processing by an access server when an abnormality occurs in an I/O processing server.
FIG. 8 is a (first) chart for explaining processing by an access server.
FIG. 9 is a (second) chart for explaining processing by an access server.
FIG. 10 is a (third) chart for explaining processing by an access server.
FIG. 11 is a (fourth) chart for explaining processing by an access server.
FIG. 12 is a chart for explaining a transition status of a list in a management table in sorting.
FIG. 13 is a (first) chart for explaining processing by an I/O processing server.
FIG. 14 is a (second) chart for explaining processing by an I/O processing server.
FIG. 15 is a (third) chart for explaining processing by an I/O processing server.
FIG. 16 is a flowchart of processing when an access server reselects an I/O processing server.
FIG. 17 is a chart illustrating a table managed by an access server and an example of transition of the table.
FIG. 18 is a chart illustrating a table managed by an I/O processing server and an example of transition of the table.
FIG. 19 is a diagram illustrating a mechanism for controlling a management table of eachof anaccess server and an I/O processing server.
FIG. 20 is a process flow of a management table monitoring unit.
FIG. 21 is a diagram illustrating an example of a response data format when an I/O processing request is implemented by a SCSI command.
FIG. 22 is a sequence chart of a process of inquiring of an I/O processing server about a load by an access server.
FIG. 23 is a diagram illustrating the format of a response to INQUIRY that is a load information inquiry command.
FIG. 24 is a flowchart illustrating processing by an access server at the time of inquiry about a load status.
FIG. 25 is a diagram for explaining the hardware configuration of each of an access server and an I/O processing server when processing according to the present embodiment is implemented by a program.

### Preferred Embodiments

The embodiment below is applied to, for example, a system (e.g., a cloud system) with a large number of servers and a large number of storages. The embodiment provides a system which has uniformity in service achieved by leveling the load on the whole system and has reliability high enough to continue a service even in the event of a failure in any piece of equipment at the time of load leveling.

To this end, I/O processing request information which an access server sends to an I/O processing server and response information which the I/O processing server returns to the access server are extended.

If an I/O processing server is connected as an iSCSI target device, a request from an access server is transmitted as a command which is obtained by extending a SCSI command. A response from the I/O processing server to the access server is implemented by extending response information of a SCSI command. (If an I/O processing server is connected as a Fibre Channel target, a request from an access server and a response from the I/O processing server to the access server are both implemented as extensions of a Fibre Channel command. Since ways for implementation in the both cases are the same, the case of iSCSI will be described as an example.)

An object of load distribution here is a whole system including I/O processing servers and storage devices, as viewed from an access server. If an access server desires to access given data, the access server needs to gain access to a storage device in which the data is stored. In this case, even if the storage device is highly loaded and is not easily accessible, the access server cannot gain access to a storage device without the data desired to be accessed. However, since a plurality of storage devices and a plurality of I/O processing servers are interconnected, switching from one I/O processing server accessible to a desired storage device to another can be performed. Although the loads on storage devices cannot be distributed, the loads on I/O processing servers which transmit I/O processing requests to the storage devices can be distributed. Distribution of the loads on I/O processing servers allows uniformization of the load on a system including the I/O processing servers and storage devices, as viewed from an access server. In this case, the load on each I/O processing server corresponds to a response time from issuance of an I/O processing request to a storage device to completion of the I/O processing request. It is thus possible to perform load distribution by switching from an I/O processing server with a longer response time to an I/O processing server with a shorter response time.

Load distribution is performed in the manner below.

Briefly speaking, if an I/O processing server becomes overloaded, the I/O processing server gives a response to the effect that the I/O processing server is overloaded to an I/O processing request (request) from an access server. Upon receipt of the response, the access server distributes the I/O processing request to a different I/O processing server. To which storage device each I/O processing server is connected at the start of operation of a system is determined at the time of startup of the system. This is to prevent the traffic to some I/O processing servers from becoming heavy at the start of the operation.

Since an access server performs distribution by itself on the basis of the load statuses of I/O processing servers, even if there are a plurality of access servers, communication and adjustment between the access servers are unnecessary.

That is, an I/O processing server determines, on the basis of a response time from when the I/O processing server receives an I/O processing request from an access server to when the I/O processing server returns a response from a storage device to the access server (including a time for processing in the server itself), whether the server itself is overloaded. If the I/O processing server is overloaded, the I/O processing server notifies the access server that the I/O processing server is overloaded. Upon receipt of the notification to the effect that the I/O processing server is overloaded from the I/O processing server, the access server transmits the I/Oprocessing request to a different I/O processing server.

An access server transmits a command for a load information response to all I/O processing servers in order to check the loads on storage devices connected to I/O processing servers and on the I/O processing servers. The access server asks an I/O processing server under a lowest load to process an I/O processing request, to which no response has been made or which has resulted in an error, on the basis of responses to the command.

Even in load distribution when an access server receives a response indicating overload from an I/O processing server, the access server transmits a command for a load information response to all I/O processing servers. If the access server asks an I/O processing server under a lower load to perform I/O processing, on the basis of a result of the transmission, more efficient load distribution can be performed.

From the foregoing, efficient distribution of loads of I/O processing requests in a cloud system allows improvement in the performance of the whole system. Although use of a large number of servers enhances the probability of a failure in any of I/O processing servers, a service provided by a cloud system can be continued even in the event of a failure.

Note that if an abnormality occurs in an I/O processing server, an access server can sense the abnormality as no response to an I/O processing request or an error. In this case, the access server issues an I/O processing request to a different I/O processing server.

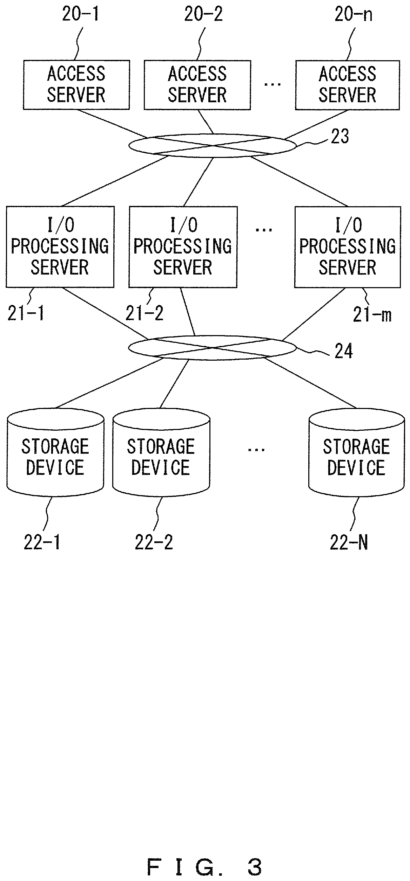

FIG. 3 is a configuration diagram of an overall system including a load distribution system according to the present embodiment.

The overall system includes a plurality of access servers 20-1 to 20-n (physical servers for providing a cloud service; a large number of virtual machines are made to run on the access servers). The overall system further includes a plurality of I/O processing servers 21-1 to 21-m (servers which process I/O processing requests issued by the access servers) andaplurality of storage devices 22-1 to 22-N. These devices are connected by networks 23 and 24.

Each two of the access servers 20-1 to 20-n do not have a communication path for management in terms of security ensuring, and communication for adjustment of the loads on the I/O processing servers is not performed.

Each two of the I/O processing servers 21-1 to 21-m do not have a communication path for management in terms of security ensuring, and communication for adjustment of the loads on the two I/O processing servers is not performed.

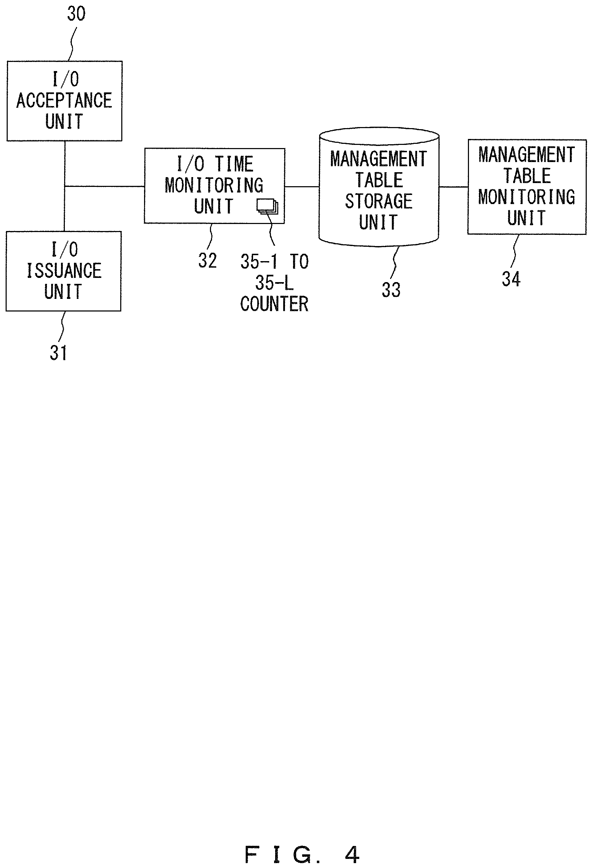

FIG. 4 is a block diagram of each of an access server and an I/O processing server.

An access server and an I/O processing server can each be represented with the same block diagram. An I/O acceptance unit 30 accepts a transmitted I/O processing request (request) . If the device in FIG. 4 is an access server, the I/O acceptance unit 30 accepts an I/O processing request issued from a user application. If the device in FIG. 4 is an I/O processing server, the I/O acceptance unit 30 accepts an I/O processing request issued from an access server.

An I/O time monitoring unit 32 monitors a time from acceptance of an I/O processing request to reception of a response to the I/O processing request and return of the response to an access server and updates a management table of a management table storage unit 33, as needed. The I/O time monitoring unit 32 includes L counters 35-1 to 35-L corresponding in number to I/O processing servers. When an overload response to a response is not returned, a corresponding counter counts up to update a value in a counter value holding unit of the management table. The number L is equal tomcorresponding in number to I/O processing servers if the device in FIG. 4 is an access server and is equal to N corresponding in number to storage devices if the device in FIG. 4 is an I/O processing server.

The management table will be described later. A management table monitoring unit 34 monitors a threshold level which is registered in the management table stored in the management table storage unit 33. An I/O issuance unit 31 is intended to transfer an I/O processing request accepted by the I/O acceptance unit 30 after a time of acceptance of the I/O processing request is registered. If the device in FIG. 4 is an access server, the I/O issuance unit 31 transmits an I/O processing request to an I/O processing server. On the other hand, if the device in FIG. 4 is an I/O processing server, the I/O issuance unit 31 transmits an I/O processing request to a storage device.

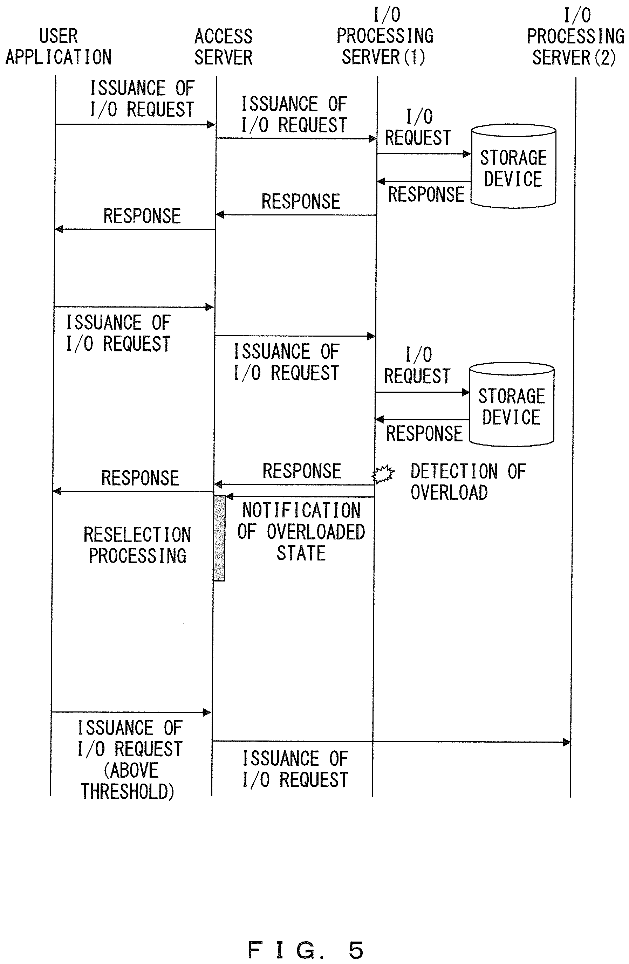

FIG. 5 is a sequence chart illustrating a basic flow of communication between an access server and I/O processing servers.

An I/O processing request is issued from a user application, and a storage device is notified of the I/O processing request via an access server and I/O processing server (1). I/O processing server (1) receives a response to the I/O processing request and measures a response time from when the I/O processing server receives the I/O processing request from the access server to when a response from the storage device is returned to the access server. If the response time does not exceed a threshold which is set in the server itself currently, a response indicating normalcy is returned from the I/O processing server to the access server and the user application. On the other hand, if the response time exceeds the threshold set in the server itself currently, it is determined that there is an overload. Since the response time includes a time from the issuance of the I/O processing request to completion of processing of the I/O processing request, the response time includes a response time of the storage device and a processing time of the I/O processing server. Thus, if the response time exceeds the threshold, it is surmised that there is an overload in one or both of the storage device and the I/O processing device.

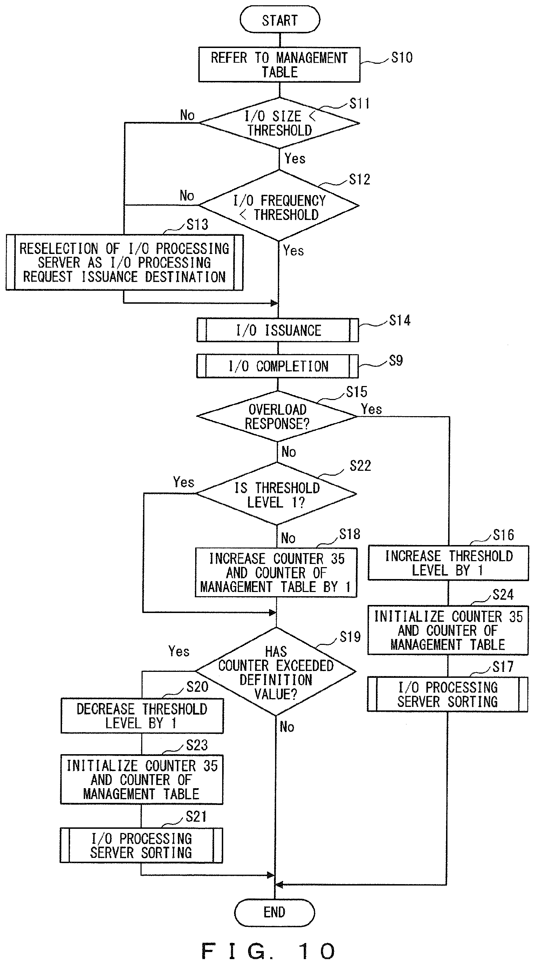

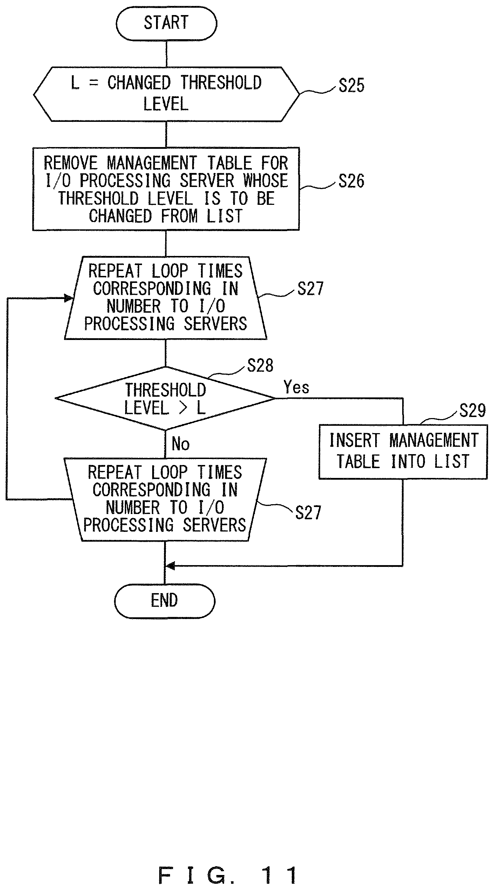

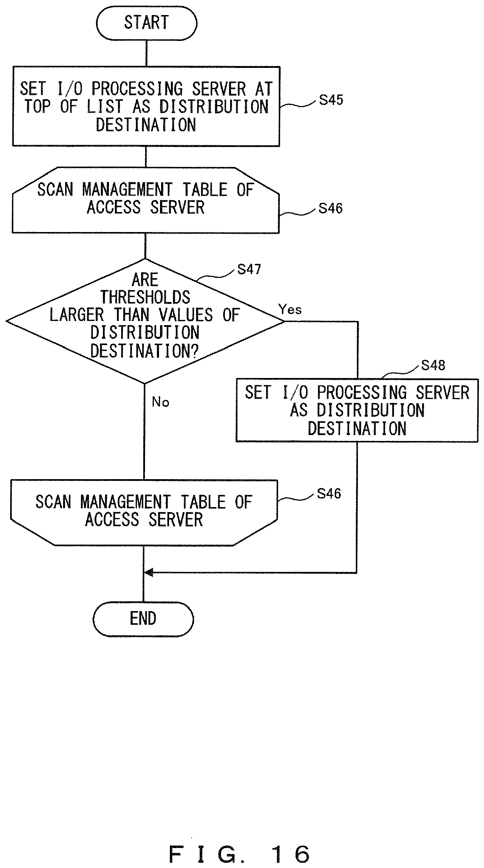

If I/O processing server (1) detects an overload for the I/O processing request to the storage device as an access destination, the I/O processing server returns a response to the access server as an issuer of the I/O processing request and notifies the access server of an overloaded state. Upon receipt of overload information from the I/O processing server, the access server distributes a subsequent I/O processing request to a different I/O processing server at the time of issuance of the I/O processing request. The distribution of an I/O processing request to a different I/O processing server is called reselection processing in FIG. 5. The reselection processing will be described later with reference to FIG. 16. The access server refers to a management table in FIGS. 10 and 11 (to be described later). If an I/O processing request size (or issuance frequency) exceeds a threshold, the access server determines that further distribution is necessary, and an I/O processing request after the subsequent I/O processing request is made to an I/O processing server different from the different I/O processing server. An I/O processing request size here refers to the quantity of data to be read out from a storage device or the quantity of data to be written to a storage device that is specified by an I/O processing request.

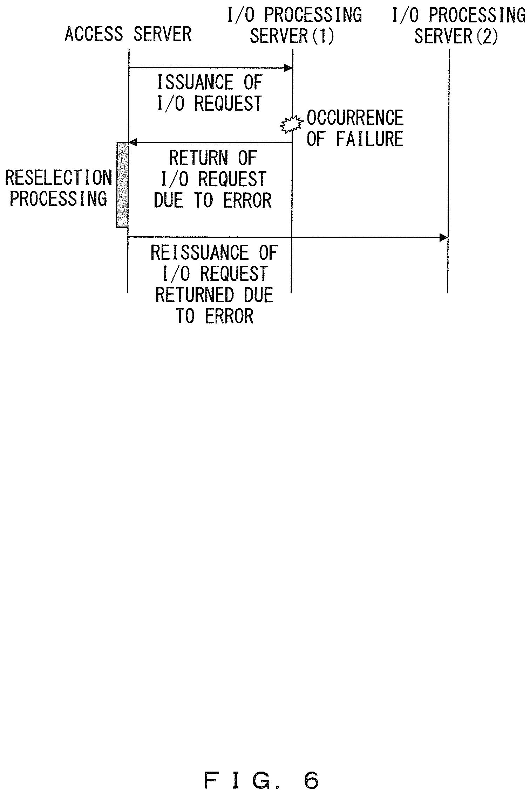

FIG. 6 is a sequence chart illustrating an overall flow of a case where an abnormality occurs in an I/O processing server, and switching from the I/O processing server is performed.

If an error occurs in an I/O processing server, an I/O processing request issued by an access server results in an error. The access server is considered to be capable of sensing an abnormality in the I/O processing server at this time. Upon sensing of the abnormality in the I/O processing server, the access server executes reselection processing and reissues an I/O processing request to a different I/O processing server. With this configuration, a service can be continued even when an abnormality occurs in an I/O processing server.

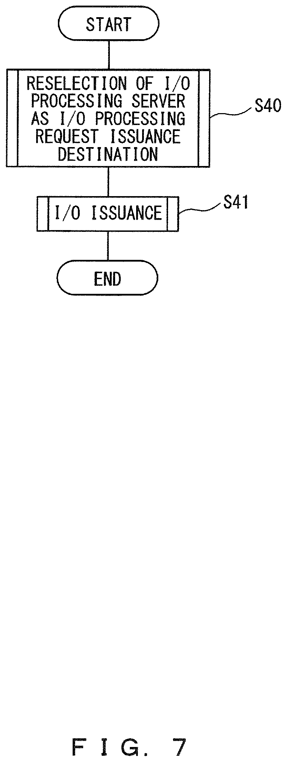

FIG. 7 is a flowchart of processing by an access server when an abnormality occurs in an I/O processing server.

In a process of reselecting an I/O processing server as an I/O processing request issuance destination in step S40, management tables for I/O processing servers are referred to, and an I/O processing server with a lowest threshold level (to be described later) is selected as a server as an I/O processing request reissuance destination among from I/O processing servers meeting the requirement that an I/O size and an I/O frequency be not more than thresholds. With this selection, an I/O processing request can be issued to an I/O processing server which is determined to be under a lower load.

If an I/O processing server recovers from an abnormality, the I/O processing server is set again as an object of I/O issuance in an access server. With this setting, the I/O processing server after the recovery becomes an object of load distribution again.

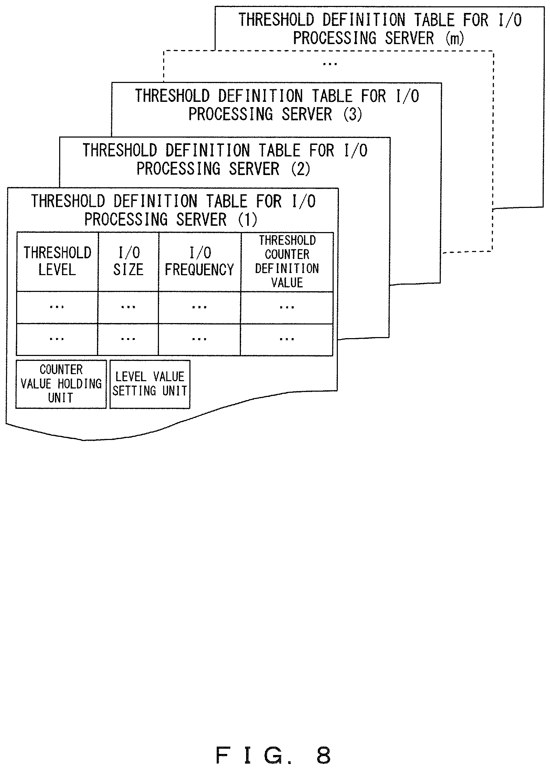

FIGS. 8 to 11 are charts for explaining processing by an access server.

An access server manages, for each I/O processing server, a threshold for a size of an I/O processing request which can be issued and a threshold for an I/O frequency. At the time of I/O processing request issuance, an I/O processing request with a size larger than a threshold (or an I/O processing request with a frequency above a threshold) of an I/O processing server previously asked is made to a different I/O processing server. If there is a response indicating an overloaded state from an I/O processing server, thresholds are decreased in small steps (if there is no response indicating an overloaded state, a threshold size is increased in small steps). This reduces the processing load on an I/O processing server.

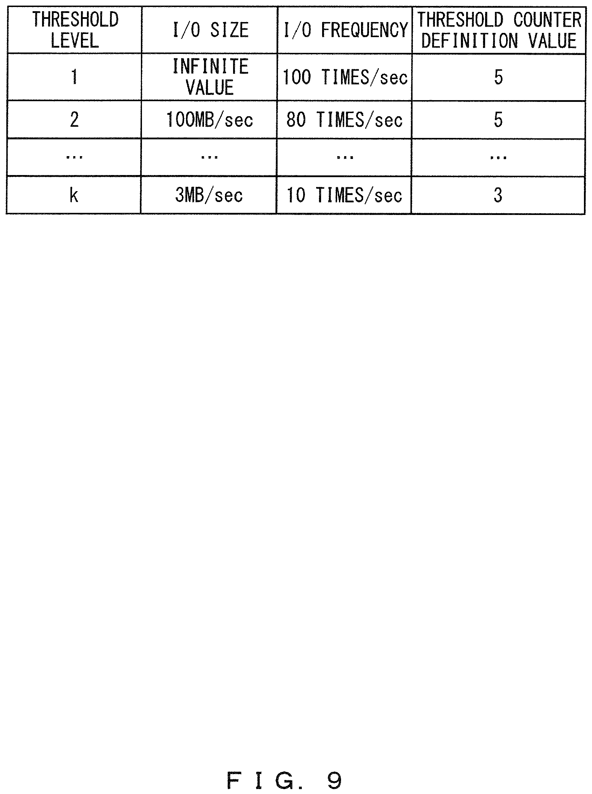

FIGS. 8 and 9 illustrate an example of a management table of an access server.

FIG. 8 illustrates a management table. The management table is a collection of tables, in which a plurality of threshold definition tables are arranged as a list. A threshold definition table in the management table is provided for each I/O processing server. Each threshold definition table holds a threshold for an I/O processing request size, a threshold for an I/O processing request frequency, and a threshold counter definition value in association with a threshold level. The threshold definition table for each I/O processing server has a counter value holding unit and a level value setting unit. The level value setting unit specifies at which one of threshold levels in the threshold definition table the I/O processing server is currently located. A threshold counter definition value causes a threshold level set in the level value setting unit to be changed when the counter value holding unit comes to have the value. Each counter 35 in FIG. 4 increments a count value by 1 when there is no overload response. The counters are provided corresponding in number to the I/O processing servers. A count value of a corresponding counter is held by the counter value holding unit. Each time the counter counts up, a value in the counter value holding unit is changed. The counter value holding unit holds a value of the counter that counts up when there is no overloaded state. When the value in the counter value holding unit becomes the threshold counter definition value, the threshold level in the level value setting unit is changed, the counter 35 is reset, and the counter value in the counter value holding unit is initialized to 0.

FIG. 9 illustrates, in detail, a threshold definition table for one I/O processing server among m tables in FIG. 8. A threshold level is set to take a value ranging from 1 to k. An I/O size is an infinite value when the threshold level is 1 and decreases with increase in the threshold level. The I/O size is a threshold for an I/O processing request size. An I/O frequency is 100 times/sec when the threshold level is 1 and decreases with increase in the threshold level. The I/O frequency is a threshold for an I/O processing request frequency. A threshold counter definition value defines a value which causes the threshold level to be changed when a counter value reaches the value.

The management table in FIGS. 8 and 9 is defined in advance by a system administrator. The system administrator estimates the magnitude of a load on an I/O processing server for each of labels for set values as thresholds called threshold levels on the basis of the machine power of the I/O processing server and sets levels for thresholds. If there is an overload response, thresholds are changed by increasing or decreasing a corresponding threshold level. If a response to an I/O processing request is not an overload response, a corresponding counter counts up. When the counter exceeds a corresponding threshold counter definition value, a corresponding threshold level is decreased.

FIG. 10 is a flowchart illustrating processing by an access server.

The processing in FIG. 10 is executed each time a new I/O processing request is made.

Referring to FIG. 10, in step S10, an access server refers to a management table (to be described later) for an I/O processing server connected to a storage device, access to which is to be gained, and checks a threshold level of the I/O processing server, for example, at the start of operation. A level value setting unit which holds a current threshold level of the I/O processing server is present in threshold definition tables included in the management table, and the access server checks a value of the current threshold level. In step S11, the access server determines whether an I/O processing request size is less than a threshold corresponding to the threshold level. If the determination in step S11 is NO, the flow advances to step S13. On the other hand, if the determination in step S11 is YES, the flow advances to step S12. In step S12, the access server determines whether an I/O processing request frequency is less than a threshold corresponding to the threshold level. The frequency is, for example, the number of I/O processing requests issued per second. The access server acquires the frequency by counting the number of I/O processing requests which the access server itself is to issue to the I/O processing server per second. If the determination in step S12 is NO, the flow advances to step S13. On the other hand, if the determination in step S12 is YES, the flow advances to step 14.

In step S13, the access server reselects an I/O processing server as an I/O processing request issuance destination according to FIG. 16 (to be described later), and the flow advances to step S14. In step S14, the access server issues an I/O processing request. In step S9, the access server receives a response to the issued I/O processing request, returns the response to a user application, and completes I/O processing. In step S15, the access server determines whether a response time of the response to the issued I/O processing request indicates an overload (there is an overload response from the I/O processing server). If the determination in step S15 is YES, the flow advances to step S16. On the other hand, if the determination in step S15 is NO, the flow advances to step S22.

In step S16, the access server increases the value of the threshold level by 1. In step S24, the access server initializes the counter 35 and a counter value holding unit of the management table. In step S17, the access server performs I/O processing server sorting (to be described later) and ends the processing. In step S22, the access server determines whether the threshold level set in the level value setting unit of the threshold definition table for the I/O processing server, with which the access server is currently dealing, is 1. The determination is to prevent the counter from counting up if the threshold level is 1. The reason for the prevention is that the threshold level cannot be decreased any more in a process of decreasing the threshold level by 1 in step S20 (to be described later). If the determination in step S22 is NO, the flow advances to step S18. On the other hand, if the determination in step S22 is YES, the flow advances to step S19. In step S18, the counter 35 counts up, and the access server increases a value of the counter value holding unit of the threshold definition table by 1 accordingly. In step S19, the access server determines whether the counter has exceeded a definition value. If the determination in step S19 is NO, the access server ends the processing. On the other hand, if the determination in step S19 is YES, the flow advances to step S20.

In step S20, the access server decreases the threshold level by 1. In step S23, the access server resets the counter 35 and initializes the counter value holding unit of the management table. In step S21, the access server performs the I/O processing server sorting (to be described later) and ends the processing.

Before the start of the processing in FIG. 10, as an I/O processing server to which an I/O processing request is to be transmitted, an I/O processing server corresponding to a threshold definition table at the top of the list in the management table is set after the start of operation of the system. When the I/O processing server becomes overloaded after that, I/O processing requests come to be transmitted to a different I/O processing server.

The I/O processing server sorting is to change the order of the threshold definition tables in the management table including a plurality of threshold definition tables.

FIG. 11 is a flowchart of the I/O processing server sort processing.

In the I/O processing server sorting, threshold definition tables are arranged in ascending order of a threshold level held in a level value setting unit of a threshold definition table, a list is produced so as to correspond to I/O processing servers, and a collection of tables, in which the plurality of threshold definition tables are arranged as a list, is set as a management table.

In step S25, a threshold level changed in step S16 or S20 of FIG. 10 is put into a variable (e.g., L). In step S26, a threshold definition table for an I/O processing server for which the threshold level is changed is removed from the list in the management table. The removal from the list here constitutes one process with insertion into the list in step S28 (to be described later). That is, data of the threshold definition table with the changed threshold level is read from the list, the data of the table in the list is deleted, and the data is inserted at a position suited to the ordinal rank of the threshold level of the list. A loop in step S27 is repeated times corresponding in number to I/O processing servers. In step S28, it is determined whether a current threshold level is larger than L. If the determination in step S28 is NO, the loop is continued. On the other hand, if the determination is YES, the management table is inserted into the list in the management table, and the processing ends.

By sorting the I/O processing server management table managed by the access server in ascending order of threshold level, an I/O processing server under a lowest load becomes the top of the list in the management table.

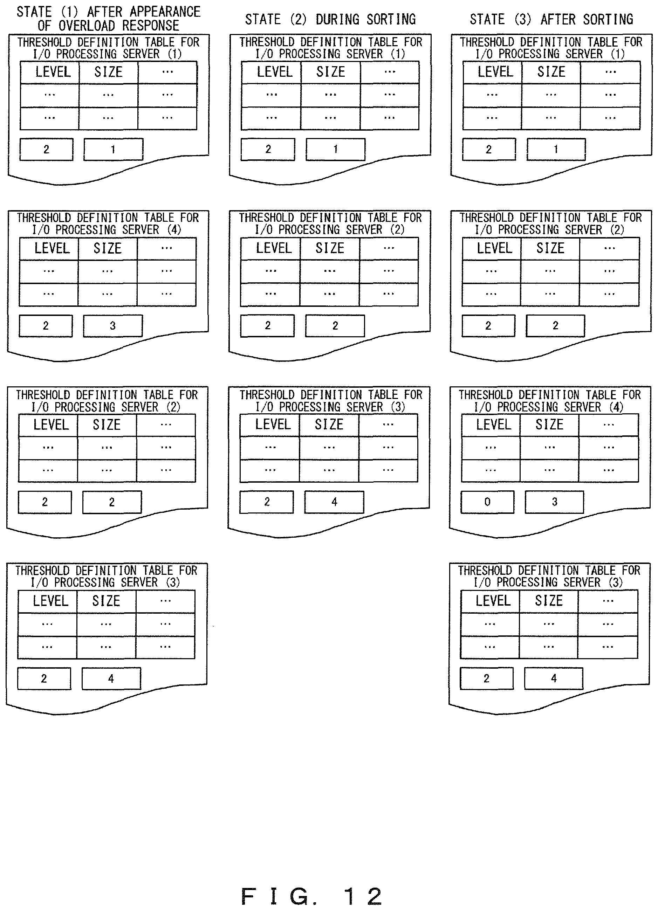

FIG. 12 is a chart for explaining a transition status of a list in a management table in the sorting.

State (1) in FIG. 12 illustrates a state after an overload response is made in the processing corresponding to step S17 of FIG. 10. Threshold definition tables for a plurality of I/O processing servers are arranged. In a threshold definition table for I/O processing server (1), a value in a level value setting unit is 1. A threshold definition table for I/O processing server (4) comes next, and a (changed) value in a level value setting unit is 3. A threshold definition table for I/O processing server (2) comes next, and a value in a level value setting unit is 2. A threshold definition table for I/O processing server (3) comes last, and a value in a level value setting unit is 4.

In the sorting, since the threshold definition table for I/O processing server (4) comes before the threshold definition table for I/O processing server (2), the threshold definition tables need to be interchanged. State (2) in FIG. 12 illustrates a state in which the threshold definition table for I/O processing server (4) at the wrong position has been removed from the list. In state (3) after sorting in FIG. 12, the threshold definition table for I/O processing server (4) has been inserted so as to come after I/O processing server (2) .

Note that, as a method for the management table list sort processing, a process of providing a pointer to a next table in each threshold definition table and changing a value of the pointer may be used instead of the method in FIG. 11.

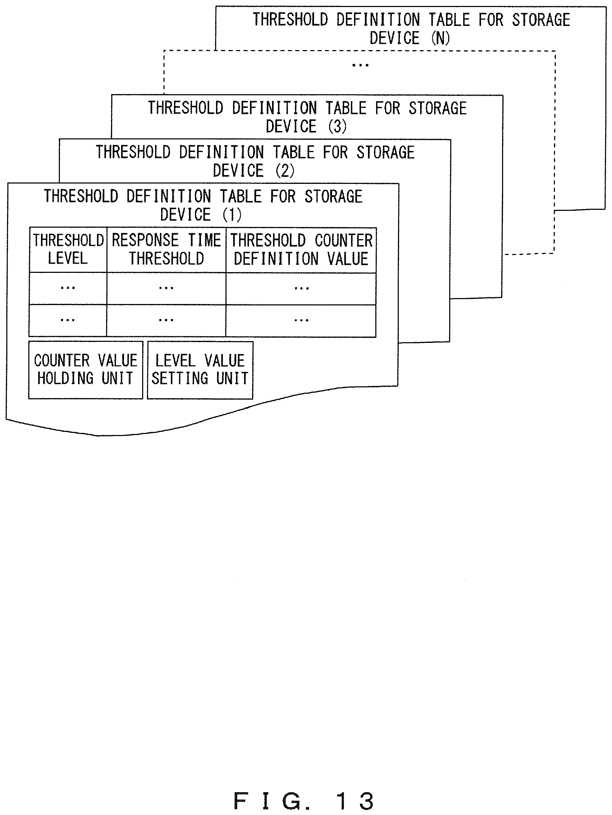

FIGS. 13 to 15 are charts for explaining processing by an I/O processing server.

An I/O processing server manages a processing time from acceptance of an I/O processing request to completion of I/O processing. If a processing time exceeds a threshold in a management table which is held by the I/O processing server, the I/O processing server returns an overload response to an access server. That is, if a response time of a storage device (including a time for processing in the server itself) exceeds the threshold, the I/O processing server returns an overload response to the access server. An initial value of the processing time threshold is set in advance to a response time geared to a response time of the storage device. If a processing time exceeds the threshold, the response time threshold is increased in small steps (the threshold is decreased in small steps if the processing time does not exceed the threshold). With this configuration, frequent returnof anoverloadresponse is avoided. For example, if I/O processing server (1) is in an overloaded state, and a different I/O processing server (I/O processing server (2)) is also in an overloaded state, an I/O processing request to I/O processing server (2) may be distributed again to I/O processing server (1). If I/O processing server (1) is still overloaded at this time, all (only two) I/O processing servers make an overload response. If such a situation persists, an overload response is made to every I/O processing request, which increases exchanges between an access server and I/O processing servers. To avoid this, a threshold is changed in small steps.

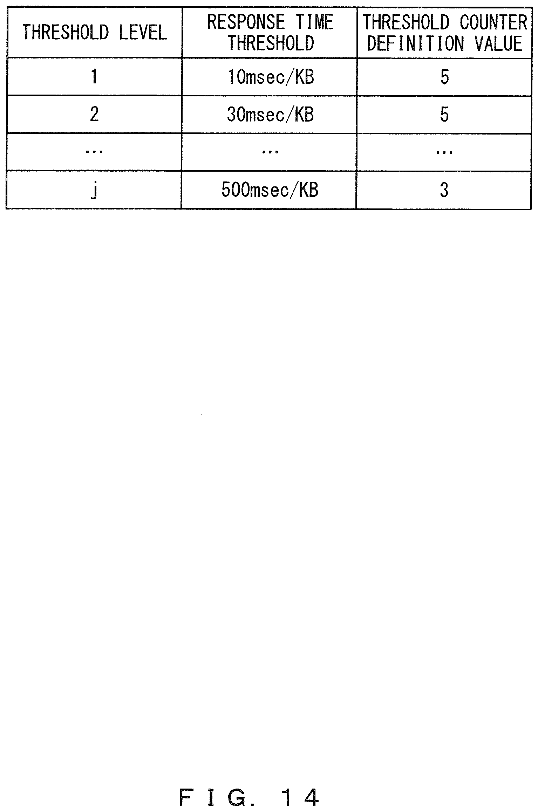

FIGS. 13 and 14 illustrate an example of a management table which is held by an I/O processing server.

As illustrated in FIG. 13, an I/O processing server holds a threshold definition table for each storage device, access to which is to be gained by the I/O processing server. A management table is a collection of tables, in which a plurality of threshold definition tables are arranged as a list. Each threshold definition table holds a response time threshold and a threshold counter definition value in association with a threshold level. The threshold definition table for each storage device has a counter value holding unit and a level value setting unit. The level value setting unit specifies at which one of threshold levels in the threshold definition table the storage device is currently located. The counter value holding unit holds a value of a counter which counts up if there is no overloaded state. When a value in the counter value holding unit becomes a threshold counter definition value, a threshold level in the level value setting unit is changed, the counter 35 is reset, and the counter value in the counter value holding unit is initialized to 0.

FIG. 14 is a chart illustrating an example of contents of the management table for each storage device in FIG. 13. A threshold level is set to take a value ranging from 1 to j. A response time threshold is 10 msec/KB when the threshold level is 1 and increases with increase in the threshold level. As a threshold counter definition value, a value which causes the threshold level to be changed when a counter value reaches the value is set.

The management table in FIGS. 13 and 14 is held by an I/O processing server in the same manner as in an access server.

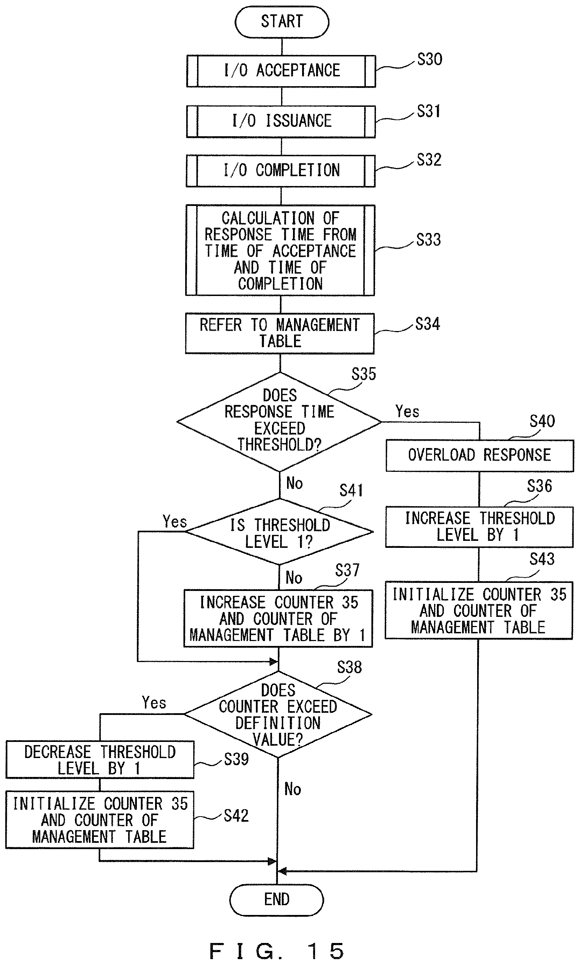

FIG. 15 is a process flow of an I/O processing server.

When an I/O processing server accepts an I/O processing request from an access server in step S30, the I/O processing server issues the I/O processing request to a storage device in step S31. In step S32, the I/O processing server receives a response to the effect that the I/O processing request is completed from the storage device, returns the response to the access server, and completes basic I/O processing. In step 533, the I/O processing server calculates a response time from a time of the acceptance of the I/O processing request and a time of the completion. In step S34, the I/O processing server refers to a management table (FIGS. 13 and 14) and acquires a threshold level set in a level value setting unit of a threshold definition table. The I/O processing server acquires a response time threshold corresponding to the acquired threshold level. In step S35, the I/O processing server determines whether the response time exceeds the acquired response time threshold. If the determination in step S35 is YES, the flow advances to step S40. On the other hand, if the determination in step S35 is NO, the flow advances to step S41.

In step S40, the I/O processing server makes a response to the effect that the I/O processing server is overloaded to the access server. In step S36, the I/O processing server increases the threshold level by 1. In step S43, the I/O processing server resets the counter 35, initializes a value in a counter value holding unit of the management table, and ends the processing. In step S41, the I/O processing server determines whether the threshold level in the level value setting unit of the threshold definition table is 1. The determination is to prevent the counter from counting up if the threshold level is 1. The reason for the prevention is that the threshold level cannot be decreased any more in a process of decreasing the threshold level by 1 in step S39 (to be described later). If the determination in step S41 is NO, the flow advances to step S37. On the other hand, if the determination is YES, the flow advances to step S38. In step S37, the I/O processing server makes the counter 35 count up and increases the value in the counter value holding unit of the management table by 1. In step S38, the I/O processing server determines whether the counter has exceeded a definition value. If the determination in step S38 is NO, the I/O processing server ends the processing. On the other hand, if the determination is YES, the flow advances to step S39. In step S39, the I/O processing server decreases the threshold level by 1. In step S42, the I/O processing server resets the counter 35, initializes the value in the counter value holding unit of the management table, and ends the processing.

FIG. 16 is a flowchart of processing (step S40 of FIG. 7 and step S13 of FIG. 10) when an access server reselects an I/O processing server.

When an access server is to reselect an I/O processing server, the access server refers to values of thresholds in a management table and reselects an I/O processing server with largest thresholds (which is considered to be under a lowest load) as an I/O processing request issuance destination.

Referring to FIG. 16, in step S45, the access server sets an I/O processing server at the top of a list obtained through sorting as a distribution destination. In a loop in step S46, the access server scans a management table of the access server. That is, the access server repeats processing until there is no more threshold definition table left unprocessed among threshold definition tables for all I/O processing servers stored in the list in the management table. In step S47, the access server determines whether thresholds are larger than values of the distribution destination. If the determination in step S47 is NO, the access server continues the loop in step S46. On the other hand, if the determination is YES, the flow advances to step S48 . In step S48, the access server sets an I/O processing server selected in step S47 as the distribution destination and ends the processing.

As another method by which an access server reselects an I/O processing server, it is possible to provide a mechanism by which an access server transmits a load information check command to an I/O processing server, and the I/O processing server returns the number of I/O processing requests being processed by the server itself. An access server can refer to such a response and set an I/O processing server with a smallest number of I/O processing requests as an object of reselection.

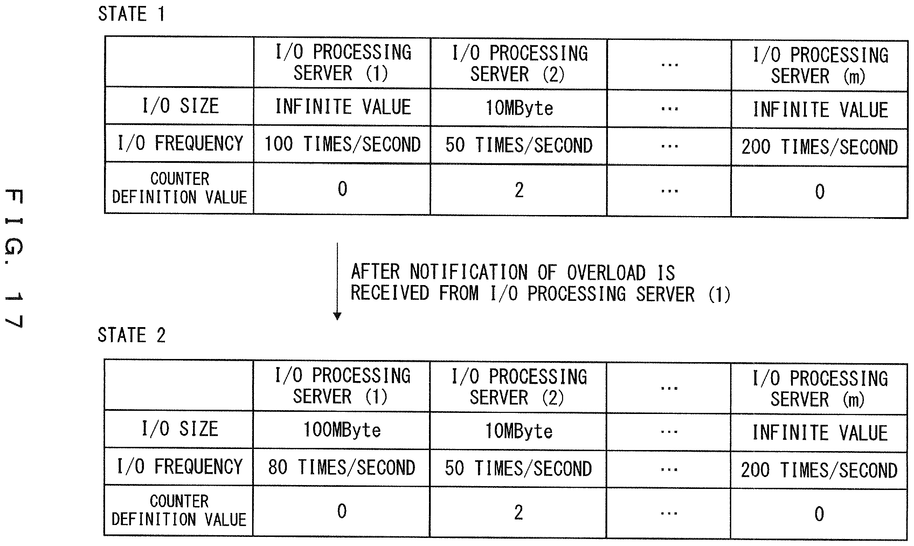

FIG. 17 is a chart illustrating a management table managed by an access server and an example of transition of the management table.

FIG. 17 is an excerpt from the management table in FIGS. 8 and 9 intended to improve visibility of only values corresponding to a threshold level set for each I/O processing server.

If there is an overload response from I/O processing server (1), a threshold level is changed by step S16 in FIG. 10. The threshold level is increased by 1, and a threshold definition table for I/O processing server (1) transitions from state 1 to state 2. On the other hand, if I/O processing server (1) does not return an overload response to an I/O processing request, the number of times no overload response has been received is incremented. When a count exceeds a threshold counter definition value, the threshold level is decreased by 1, and the threshold definition table transitions from state 2 to state 1. That is, thresholds are decreased if response times forafixednumberof I/O processing requests do not indicate an overloaded state. This prevents thresholds from decreasing while a load status is not stable.

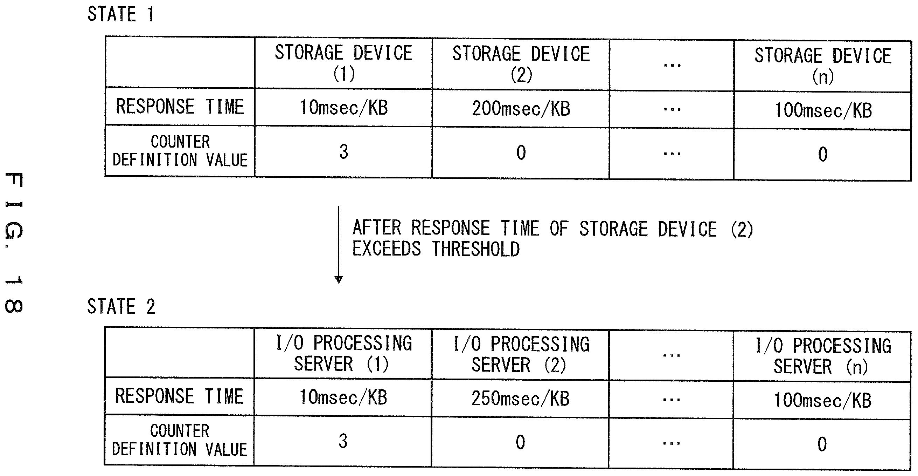

FIG. 18 is a chart illustrating a table managed by an I/O processing server and an example of transition of the table.

FIG. 18 is an excerpt from the management table in FIGS. 13 and 14 intended to improve visibility of only a value corresponding to a threshold level set for each storage device.

If an I/O response time for storage device (2) exceeds a threshold, a threshold level is increased by step S36 in FIG. 15. A threshold definition table for storage device (2) transitions from state 1 to state 2. The number of times a response to an I/O processing request has not exceeded the threshold is counted. When a count exceeds a threshold counter definition value, the threshold level is decreased by 1, and the threshold definition table transitions from state 2 to state 1. That is, the threshold is decreased if response times for a fixed number of I/O processing requests do not indicate an overloaded state. This prevents a threshold from decreasing while a load status is not stable.

If reselection is performed by checking load information with an I/O processing server by an access server at the time of I/O processing server reselection, a counter which manages the number of I/O processing requests being processed by each I/O processing server itself is prepared in advance in the I/O processing server, in addition to the table in FIG. 18. With this configuration, the number of I/O processing requests can be returned in response to checking of load information by an access server.

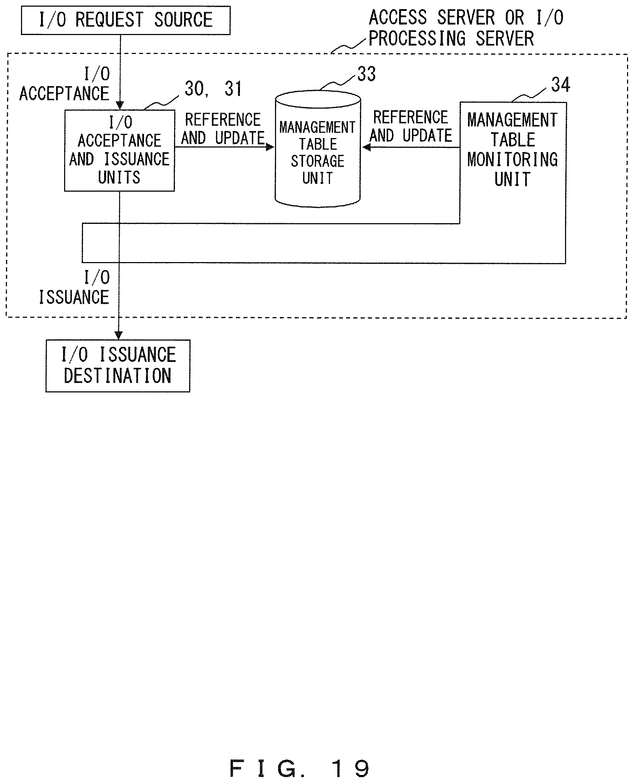

FIG. 19 is a diagram illustrating a mechanism for controlling a management table of each of an access server and an I/O processing server.

For an access server, an I/O processing request source in FIG. 19 is an application, and an I/O processing request issuance destination is an I/O processing server. For an I/O processing server, the I/O processing request source in FIG. 19 is an access server, and the I/O processing request issuance destination is a storage device.

A management table stored in the management table storage unit 33 in FIG. 19 is the same as the management table in FIGS. 8 and 9 in the case of an access server and is the same as the management table in FIGS. 13 and 14 in the case of an I/O processing server. The management table is a table which defines to which value each threshold shifts when I/O size and I/O frequency thresholds (a response time threshold in the case of the I/O processing server) change from state 1 to state 2 in FIG. 17 in the case of the access server (FIG. 18 in the case of the I/O processing server). The table is defined in advance by a system administrator.

The management table monitoring unit 34 in FIG. 19 is a function for keeping a management table of an access server or an I/O processing server up-to-date as far as possible. For example, if an access server is notified of an overloaded state in a response to an I/O processing request which is issued to an I/O processing server by the access server, the access server changes thresholds in a management table. If the thresholds are decreased to lower limits (when a threshold level is at its maximum) at this time, the access server does not issue an I/O processing request to the I/O processing server any longer. Assume that the quantity of processing by the I/O processing server is decreased some time after the entry into the above-described state. In this case, since the access server does not issue a request to the I/O processing server in spite of the decrease in the load on the I/O processing server, the thresholds in the management table are not changed, and I/O load distribution is not normally performed. In order to avoid such a situation, the management tablemonitoringunit 34 periodically issues a test I/O processing request (dummy I/O processing request) and checks the load status of an I/O issuance destination.

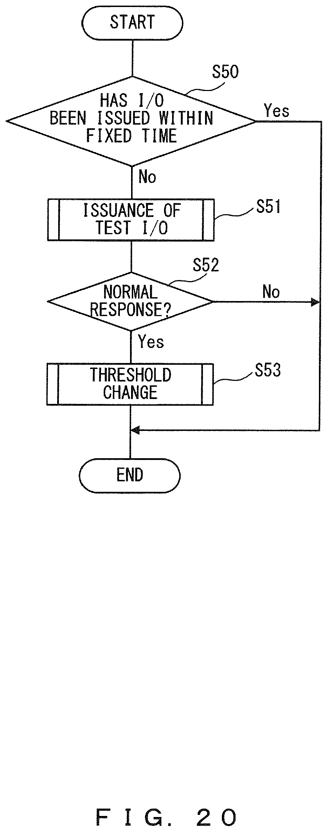

FIG. 20 is a process flow of the management table monitoring unit.

The management table monitoring unit issues a test I/O processing request (dummy I/O processing request) to an I/O issuance destination (an I/O processing server in the case of an access server or a storage device in the case of an I/O processing server) to which an I/O processing request has not been issued for a fixed time. If the I/O processing request is normally processed (if there is no overload response to the I/O processing request in the case of the access server or if a response to the I/O processing request is received within a response time in the case of the I/O processing server), thresholds (a threshold) in a management table are (is) changed. The threshold change is performed according to FIG. 10 (in the case of the access server) or FIG. 15 (in the case of the I/O processing server).

In step S50, the management table monitoring unit determines whether an I/O processing request has been issued to an overloaded I/O processing server within a fixed time. If the determination in step S50 is YES, the management table monitoring unit ends processing. On the other hand, if the determination in step S50 is NO, the management table monitoring unit issues a test I/O processing request in step S51. In step S52, the management table monitoring unit determines whether a response to the test I/O processing request is normal. If the determination in step S52 is NO, the management table monitoring unit ends the processing. On the other hand, if the determination in step S52 is YES, the management table monitoring unit changes thresholds and ends the processing.

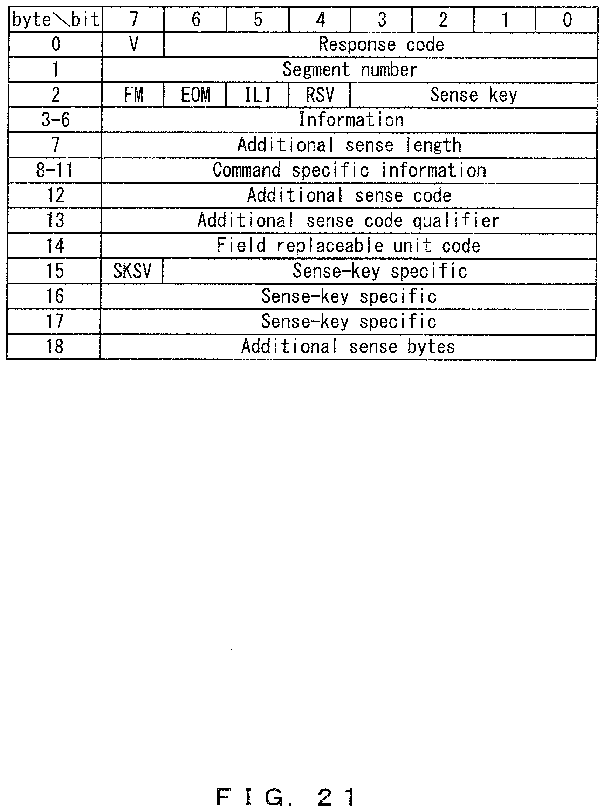

FIG. 21 is a diagram illustrating an example of a response data format when an I/O processing request is implemented by a SCSI command.

A response data format for a SCSI command in FIG. 21 is common. In a response indicating an overloaded state, pieces of code value data which are defined as values freely definable by a user are set. For example, "9" is set in the Sense key field, and "0x80" is set in the Additional sense code field. Since the code values can be freely set and used by a vendor, the code values are defined as code values which indicate a response indicating an overloaded state according to the present embodiment.

Note that a case using a Fibre Channel command is the same as the case of SCSI except that an optical fiber is used as a path for transferring a SCSI command and that a code value defined as being vender specific is used as a response indicating an overloaded state.

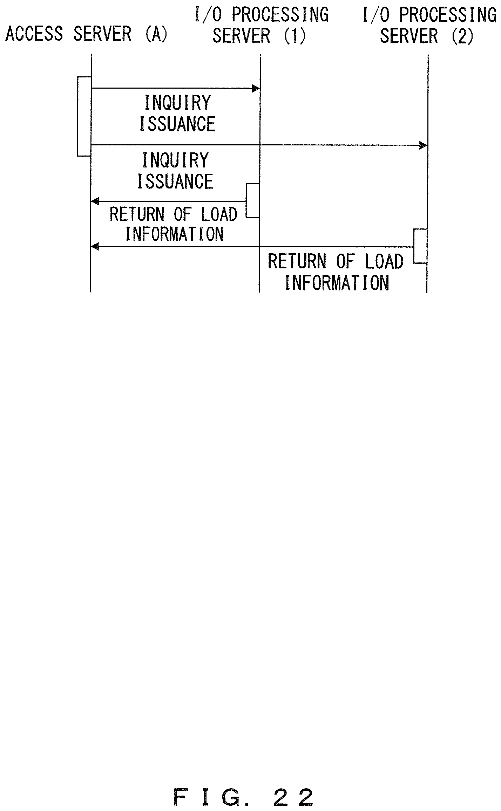

FIG. 22 is a sequence chart of a process of inquiring of an I/O processing server about a load by an access server.

In checking of a load status, access server (A) issues an INQUIRY command to I/O processing servers (1) and (2). In each of I/O processing servers (1) and (2), load information is put into a vender specific area of a command and is returned as a response to INQUIRY.

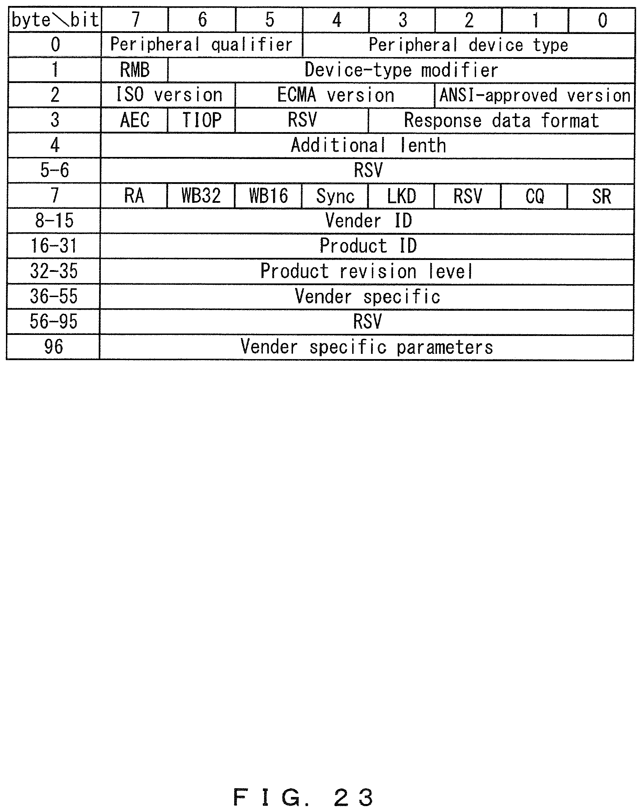

FIG. 23 is a diagram illustrating the format of a response to INQUIRY that is a command for inquiry about load information.

FIG. 23 illustrates a common format of a response to an INQUIRY command. The format has a field designated as being vender specific. An I/O processing server sets the number of I/O processing requests which have already been accepted but has not yet completed at the time of acceptance of INQUIRY in an area at 36th to 55th bytes which is designated as being vender specific and returns a response to an access server.

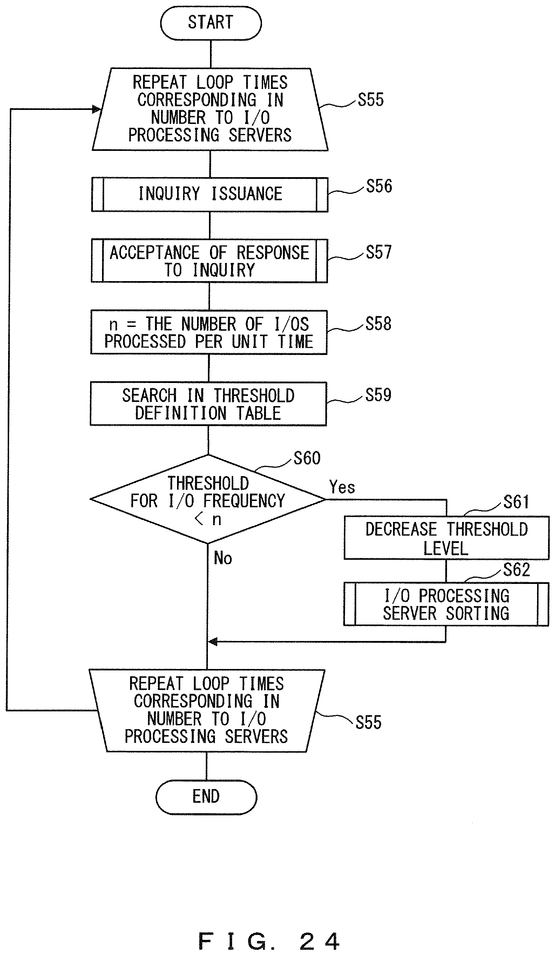

FIG. 24 is a flowchart illustrating processing by an access server at the time of inquiry about a load status.

In a loop in step S55, an access server repeats processing times corresponding in number to I/O processing servers. In step S56, the access server issues INQUIRY. In step S57, the access server accepts a response to INQUIRY. In step S58, the access server puts, into a variable (e.g., n), the number of I/O processing requests being accepted by an I/O processing server per unit time that is received through the response. In step S59, the access server refers to a threshold definition table for the I/O processing server, with which the access server is dealing, in a management table held by the access server. In step S60, the access server determines whether n exceeds an I/O frequency threshold. The threshold definition table is the same as that in FIGS. 8 and 9, and an I/O frequency value as in FIG. 9 which is pointed at by a threshold level held by a level value setting unit is used as the threshold.

If the determination in step S60 is NO, the access server repeats the loop in step S55. On the other hand, if the determination in step S60 is YES, the access server decreases a value of the threshold level in the level value setting unit of the threshold definition table in step S61 such that a value of n is not more than the I/O frequency threshold. In step S62, the access server performs I/O processing server sorting. After that, the access server repeats the loop in step S55. If processing is over for all I/O processing servers in the loop in step S55, the access server ends the processing.

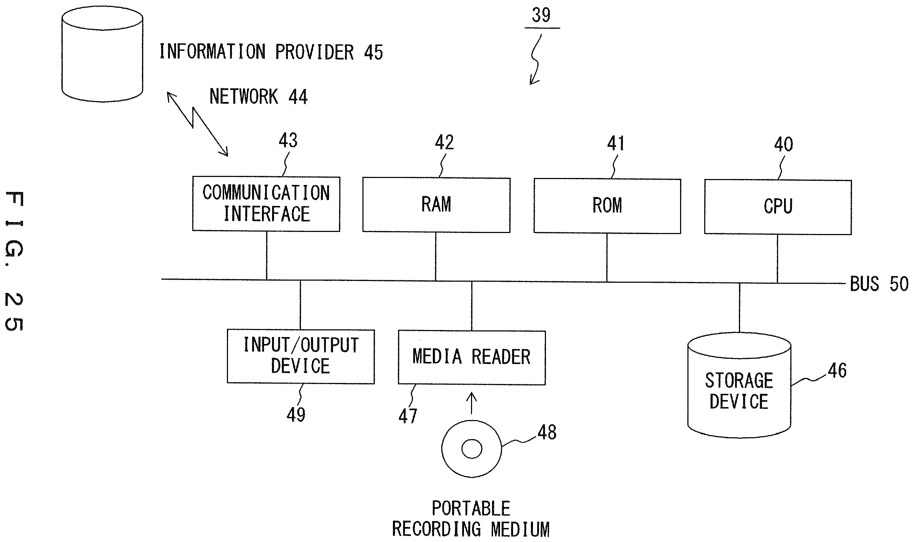

FIG. 25 is a diagram for explaining the hardware configuration of each of an access server and an I/O processing server when processing according to the present embodiment is implemented by a program.

An access server and an I/O processing server are each implemented as a computer 39 including a CPU 40.

A ROM 41, a RAM 42, a communication interface 43, a memory device 46, a media reader 47, and an input/output device 49 are connected to the CPU 40 via a bus 50. The CPU 40 loads and executes a basic program, such as a BIOS, stored in the ROM 41, thereby implementing basic operation of the computer 39.

The CPU 40 deploys a program stored in the memory device 46, such as a hard disk, which performs processing according to the present embodiment onto the RAM 4 2 and executes the program, thereby implementing processing according to the present embodiment. A program which performs processing according to the present embodiment need not be stored in the memory device 46 and may be stored in a portable recording medium 48, such as a CD-ROM, a DVD, a Blu-ray disc, an IC memory, or a flexible disk. In this case, the program stored in the portable recording medium 48 is loaded using the media reader 47 and is deployed onto the RAM 42, and the CPU 40 executes the program.

Examples of the input/output device 49 include a keyboard, a tablet, a mouse, a display, and a printer. The input/output device 49 is used by a user operating the computer 39 to make an input and output a processing result.

The communication interface 43 accesses a database or the like of an information provider 45 via a network 44 and downloads a program or the like onto the computer 39. The downloaded program is stored in the memory device 46 or the portable recording medium 48 or is directly deployed onto the RAM 42 and is executed by the CPU 40. Execution of the program may be performed by a computer of the information provider 45, and the computer 39 may perform only input/output operation.

### Explanation of the Codes

- 10, 10-1, 10-2, 20-1 to 20-n: access server
- 11, 13, 15, 23, 24: network
- 12: load distribution device
- 14-1 to 14-3, 21-1 to 21-m: I/O processing server
- 16-1 to 16-4, 22-1 to 22-N: storage device
- 30: I/O acceptance unit
- 31: I/O issuance unit
- 32: I/O time monitoring unit
- 33: management table storage unit
- 34: management table monitoring unit
- 40: CPU
- 41: ROM
- 42: RAM
- 43: communication interface
- 44: network
- 45: information provider
- 46: storage device
- 47: media reader
- 48: portable recording medium
- 49: input/output device
- 50: bus

## Claims

1. A load distribution system comprising:
a plurality of storage devices (22-1, ..., 22-N) configured to accept an input processing request or an output processing request and return a processing result;
a plurality of I/O processing servers (21-1, ..., 21-m) configured to receive the input processing request or the output processing request, transmit the input processing request or the output processing request to one of the plurality of storage devices (22-1, ..., 22-N), receive the processing result from the one of the plurality of storage devices, and return the processing result response,
when a response time from the receipt of the input processing request or the output processing request to completion of the returning of the processing result response exceeds a threshold, send out an overload response indicating that a system which includes the storage device and the I/O processing server which receive the input processing request or the output processing request is in an overloaded state; and
increase the threshold if the response time exceeds the threshold or decrease the threshold if the response type does not exceed the threshold; and
a plurality of access servers (20-1, ..., 20-n) configured to transmit an input processing request or an output processing request from a user to an I/O processing server which is not in an overloaded state on the basis of the overload response from the I/O processing server. and receive the overload response.

2. The load distribution system according to claim 1, wherein
the access server transmits a dummy input processing request or a dummy output processing request to the I/O processing server that is in an overloaded state and checks whether the overloaded state has been eliminated.

3. The load distribution system according to claim 1, wherein
the access server holds, for each of the I/O processing servers, a threshold level associated with a threshold for determining a load status which decreases with increase in the level and, when the access server is notified of an overloaded state, increases a value of the threshold level of a corresponding one of the I/O processing servers.

4. The load distribution system according to claim 3, wherein
the threshold level is decreased in value when a overloaded state has been eliminated.

5. The load distribution system according to claim 4, wherein
the access server make a list of the I/O processing servers in an order of the I/O processing servers with lower load first and distributes the input processing request or the output processing request in an order of the I/O processing servers registered on the list.

6. The load distribution system according to claim 1, wherein
the I/O processing server holds, for each of the storage devices (22-1, ..., 22-N), a threshold level associated with a threshold for determining a load status which increases with increase in the level and, when the response time indicates an overloaded state, increases a value of the threshold level of a corresponding one of the storage devices.

7. The load distribution system according to claim 6, wherein
the threshold level is decreased in value when a overloaded state has been eliminated.

8. The load distribution system according to claim 7, wherein
the I/O processing server notifies the access server of an overloaded state when the response time is larger than a threshold for determining a load status corresponding to the threshold level.

9. A load distribution method for a load distribution system including a plurality of storage devices (22-1, ..., 22-N) configured to accept an input processing request or an output processing request and return a processing result,
a plurality of I/O processing servers (21-1, ..., 21-m) configured to receive the input processing request or the output processing request, transmit the input processing request or the output processing request to one of the plurality of storage devices (22-1, ..., 22-N), receive the processing result from the one of the plurality of storage devices, and return the processing result response, and a plurality of access servers (20-1, ..., 20-n) configured to transmit input processing request or an output processing request from a user to the I/O processing and receive the overload response. the load distribution method comprising:
sending out, by the I/O processing server, an overload response indicating that a system which includes the storage device and the I/O processing server which receive the input processing request or the output processing requestis in an overloaded state when a response time from the receipt of the input processing request or the output processing request to completion of the returning of the processing result response exceeds a threshold, increase the threshold if the response time exceeds the threshold or decrease the threshold if the response type does not exceed the threshold; and
transmitting, by the plurality of access servers (20-1, ..., 20-n), the input processing request or the output processing request to an I/O processing server which is not in an overloaded state on the basis of the overload response from the I/O processing server.

10. A program comprising instructions which when executed by a processing device, cause the processing device to carry out the method of claim 9.

## Patentansprüche

1. Lastverteilungssystem, umfassend:
eine Vielzahl von Speichervorrichtungen (22-1, ..., 22-N), die dazu konfiguriert sind, eine Eingabeverarbeitungsanfrage oder eine Ausgabeverarbeitungsanfrage anzunehmen und ein Verarbeitungsergebnis auszugeben;
eine Vielzahl von I/O-Verarbeitungsservern (21-1, ..., 21-m), die dazu konfiguriert sind, die Eingabeverarbeitungsanfrage oder die Ausgabeverarbeitungsanfrage zu empfangen, die Eingabeverarbeitungsanfrage oder die Ausgabeverarbeitungsanfrage an eine der Vielzahl von Speichervorrichtungen (22-1, ..., 22-N) zu übertragen, das Verarbeitungsergebnis von der einen der Vielzahl von Speichervorrichtungen zu empfangen und die Verarbeitungsergebnisantwort zurückzugeben, wenn eine Antwortzeit von dem Empfang der Eingabeverarbeitungsanfrage oder der Ausgabeverarbeitungsanfrage zur Vervollständigung des Zurückgebens der Verarbeitungsergebnisantwort einen Schwellenwert überschreitet, eine Überlastungsantwort auszusenden, die anzeigt, dass ein System, das die Speichervorrichtung und den I/O-Verarbeitungsserver enthält, die die Eingabeverarbeitungsanfrage oder die Ausgabeverarbeitungsanfrage empfangen, in einem überlasteten Zustand ist; und den Schwellenwert zu erhöhen, falls die Antwortzeit den Schwellenwert überschreitet, oder den Schwellenwert zu verringern, falls der Antworttyp den Schwellenwert nicht überschreitet; und
eine Vielzahl von Zugriffsservern (20-1, ..., 20-n), die dazu konfiguriert sind, eine Eingabeverarbeitungsanfrage oder eine Ausgabeverarbeitungsanfrage von einem Benutzer an einen I/O-Verarbeitungsserver zu übertragen, der nicht in einem überlasteten Zustand ist, auf der Basis der Überlastungsantwort von dem I/O-Verarbeitungsserver, und die Überlastungsantwort zu empfangen.

2. Lastverteilungssystem nach Anspruch 1, wobei der Zugriffsserver eine Dummy-Eingabeverarbeitungsanfrage oder eine Dummy-Ausgabeverarbeitungsanfrage an den I/O-Verarbeitungsserver sendet, der in einem überlasteten Zustand ist, und prüft, ob der überlastete Zustand beseitigt wurde.

3. Lastverteilungssystem nach Anspruch 1, wobei der Zugriffsserver für jeden der I/O-Verarbeitungsserver einen Schwellenwertpegel hält, der einem Schwellenwert zum Bestimmen eines Lastzustands zugeordnet ist, der mit einer Zunahme des Pegels abnimmt, und, wenn der Zugriffsserver über einen überlasteten Zustand benachrichtigt wird, einen Wert des Schwellenwertpegels eines entsprechenden der I/O-Verarbeitungsserver erhöht.

4. Lastverteilungssystem nach Anspruch 3, wobei der Schwellenwertpegel wertmäßig verringert wird, wenn ein überlasteter Zustand beseitigt wurde.

5. Lastverteilungssystem nach Anspruch 4, wobei der Zugriffsserver eine Liste der I/O-Verarbeitungsserver in einer Reihenfolge der I/O-Verarbeitungsserver mit niedriger Last zuerst erstellt und die Eingabeverarbeitungsanfrage oder die Ausgabeverarbeitungsanfrage in einer Reihenfolge der auf der Liste registrierten I/O-Verarbeitungsserver verteilt.

6. Lastverteilungssystem nach Anspruch 1, wobei der I/O-Verarbeitungsserver für jede der Speichervorrichtungen (22-1, ..., 22-N) einen Schwellenwertpegel hält, der einem Schwellenwert zum Bestimmen eines Lastzustands zugeordnet ist, der mit einer Zunahme des Pegels zunimmt, und, wenn die Antwortzeit einen überlasteten Zustand anzeigt, einen Wert des Schwellenwertpegels eines entsprechenden der I/O-Verarbeitungsserver erhöht.

7. Lastverteilungssystem nach Anspruch 6, wobei der Schwellenwertpegel wertmäßig verringert wird, wenn ein überlasteter Zustand beseitigt wurde.

8. Lastverteilungssystem nach Anspruch 7, wobei der I/O-Verarbeitungsserver den Zugriffsserver über einen überlasteten Zustand benachrichtigt, wenn die Antwortzeit größer als ein Schwellenwert zum Bestimmen eines Lastzustands entsprechend dem Schwellenwertpegel ist.

9. Lastverteilungsverfahren für ein Lastverteilungssystem, das eine Vielzahl von Speichervorrichtungen (22-1, ..., 22-N) umfasst, die dazu konfiguriert sind, eine Eingabeverarbeitungsanfrage oder eine Ausgabeverarbeitungsanfrage anzunehmen und ein Verarbeitungsergebnis auszugeben,
eine Vielzahl von I/O-Verarbeitungsservern (21-1, ..., 21-m), die dazu konfiguriert sind, die Eingabeverarbeitungsanfrage oder die Ausgabeverarbeitungsanfrage zu empfangen, die Eingabeverarbeitungsanfrage oder die Ausgabeverarbeitungsanfrage an eine der Vielzahl von Speichervorrichtungen (22-1, ..., 22-N) zu übertragen, das Verarbeitungsergebnis von der einen der Vielzahl von Speichervorrichtungen zu empfangen und die Verarbeitungsergebnisantwort zurückzugeben, und
eine Vielzahl von Zugriffsservern (20-1, ..., 20-n), die dazu konfiguriert sind, eine Eingabeverarbeitungsanfrage oder eine Ausgabeverarbeitungsanfrage von einem Benutzer an die I/O-Verarbeitung zu senden und die Überlastungsantwort zu empfangen,
wobei das Lastverteilungsverfahren umfasst:
Aussenden einer Überlastungsantwort durch den 1/0-Verarbeitungsserver, die angibt, dass ein System, das die Speichervorrichtung und den I/O-Verarbeitungsserver enthält, die die Eingabeverarbeitungsanfrage oder die Ausgabeverarbeitungsanfrage empfangen, in einem überlasteten Zustand ist, wenn eine Antwortzeit vom Empfang der Eingabeverarbeitungsanfrage oder der Ausgabeverarbeitungsanfrage bis zur Vervollständigung des Zurückgebens der Verarbeitungsergebnisantwort einen Schwellenwert überschreitet,
Erhöhen des Schwellenwerts, falls die Antwortzeit den Schwellenwert überschreitet, oder Verringern des Schwellenwerts, falls der Antworttyp den Schwellenwert nicht überschreitet; und
Übermitteln der Eingabeverarbeitungsanfrage oder der Ausgabeverarbeitungsanfrage durch die Vielzahl von Zugriffsservern (20-1, ..., 20-n) an einen I/O-Verarbeitungsserver, der nicht in einem überlasteten Zustand ist, auf der Basis der Überlastungsantwort von dem I/O-Verarbeitungsserver.

10. Programm, das Anweisungen umfasst, die, wenn sie von einer Verarbeitungsvorrichtung ausgeführt werden, die Verarbeitungsvorrichtung dazu veranlassen, das Verfahren nach Anspruch 9 auszuführen.

## Revendications

1. Système de répartition de charge comprenant :
une pluralité de mémoires (22-1, ..., 22-N) configurées pour accepter une demande de traitement d'entrée ou une demande de traitement de sortie et renvoyer un résultat de traitement;
une pluralité de serveurs de traitement E/S (21-1, ..., 21-m) configurés pour
recevoir la demande de traitement d'entrée ou la demande de traitement de sortie, transmettre la demande de traitement d'entrée ou la demande de traitement de sortie à l'une de la pluralité de mémoires (22-1, ..., 22-N), recevoir le résultat de traitement de l'une de la pluralité de mémoires, et renvoyer la réponse de résultat de traitement,
lorsqu'un temps de réponse entre la réception de la demande de traitement d'entrée ou de la demande de traitement de sortie et la fin du renvoi de la réponse de résultat de traitement dépasse un certain seuil, envoyer une réponse de surcharge indiquant qu'un système comprenant la mémoire et le serveur de traitement E/S qui reçoivent la demande de traitement d'entrée ou la demande de traitement de sortie est en état de surcharge ; et
augmenter le seuil si le temps de réponse dépasse le seuil ou diminuer le seuil si le temps de réponse ne dépasse pas le seuil ; et
une pluralité de serveurs d'accès (20-1, ..., 20-n) configurés pour transmettre une demande de traitement d'entrée ou une demande de traitement de sortie de la part d'un utilisateur à un serveur de traitement E/S qui n'est pas en état de surcharge d'après la réponse de surcharge provenant du serveur de traitement E/S,
et recevoir la réponse de surcharge.

2. Système de répartition de charge selon la revendication 1, dans lequel
le serveur d'accès transmet une fausse demande de traitement d'entrée ou une fausse demande de traitement de sortie au serveur de traitement E/S qui est en état de surcharge et contrôle si l'état de surcharge a été supprimé.

3. Système de répartition de charge selon la revendication 1, dans lequel
le serveur d'accès maintient, pour chacun des serveurs de traitement E/S, un niveau de seuil associé à un seuil pour la détermination d'un état de charge qui diminue lorsque le niveau augmente et, lorsque le serveur d'accès est averti d'un état de surcharge, augmente une valeur du niveau de seuil d'un serveur correspondant parmi les serveurs de traitement E/S.

4. Système de répartition de charge selon la revendication 3, dans lequel la valeur du niveau seuil est diminuée lorsqu'un état de surcharge a été supprimé.

5. Système de répartition de charge selon la revendication 4, dans lequel
le serveur d'accès dresse une liste des serveurs de traitement E/S dans un ordre des serveurs de traitement E/S avec une charge la plus faible en premier, et répartit la demande de traitement d'entrée ou la demande de traitement de sortie dans un ordre des serveurs de traitement E/S enregistrés sur la liste.

6. Système de répartition de charge selon la revendication 1, dans lequel
le serveur de traitement E/S maintient, pour chacune des mémoires (22-1, ..., 22-N), un niveau de seuil associé à un seuil pour la détermination d'un état de charge qui augmente lorsque le niveau augmente et, lorsque le temps de réponse indique un état de surcharge, augmente une valeur du niveau de seuil d'une mémoire correspondante parmi les mémoires.

7. Système de répartition de charge selon la revendication 6, dans lequel
la valeur du niveau de seuil est diminuée lorsqu'un état de surcharge a été supprimé.

8. Système de répartition de charge selon la revendication 7, dans lequel
le serveur de traitement E/S avertit le serveur d'accès d'un état de surcharge lorsque le temps de réponse est supérieur à un seuil pour la détermination d'un état de charge correspondant au niveau de seuil.

9. Procédé de répartition de charge pour un système de répartition de charge comprenant une pluralité de mémoires (22-1,..., 22-N) configurées pour
accepter une demande de traitement d'entrée ou une demande de traitement de sortie et renvoyer un résultat de traitement,
une pluralité de serveurs de traitement E/S (21-1, ..., 21-m) configurés pour recevoir la demande de traitement d'entrée ou la demande de traitement de sortie, transmettre la demande de traitement d'entrée ou la demande de traitement de sortie à l'une de la pluralité de mémoires (22-1, ..., 22-N), recevoir le résultat de traitement de l'une de la pluralité de mémoires, et renvoyer la réponse de résultat de traitement, et
une pluralité de serveurs d'accès (20-1, ..., 20-n) configurés pour transmettre une demande de traitement d'entrée ou une demande de traitement de sortie de la part d'un utilisateur au serveur de traitement E/S et recevoir la réponse de surcharge ;
le procédé de répartition de charge comprenant :
l'envoi, par le serveur de traitement E/S, d'une réponse de surcharge indiquant qu'un système comprenant la mémoire et le serveur de traitement E/S qui reçoivent la demande de traitement d'entrée ou la demande de traitement de sortie est en état de surcharge lorsqu'un temps de réponse entre la réception de la demande de traitement d'entrée ou de la demande de traitement de sortie et la fin du renvoi de la réponse de résultat de traitement dépasse un certain seuil,
l'augmentation du seuil si le temps de réponse dépasse le seuil ou la diminution du seuil si le temps de réponse ne dépasse pas le seuil ; et
la transmission, par la pluralité de serveurs d'accès (20-1, ..., 20-n), de la demande de traitement d'entrée ou de la demande de traitement de sortie à un serveur de traitement E/S qui n'est pas en état de surcharge d'après la réponse de surcharge provenant du serveur de traitement E/S.

10. Programme comprenant des instructions qui, lorsqu'elles sont exécutées par un dispositif de traitement, entraînent l'exécution du procédé selon la revendication 9 par le dispositif de traitement.
